# EUROPEAN PATENT APPLICATION

(11) **EP 2 524 950 A1**
(43) Date of publication of application: **21.11.2012**
(21) Application number: 11004098.7
(22) Date of filing: 18.05.2011
(51) Int. Cl.: C09D 131/02

(54) **Pressure sensitive adhesive copolymer compositions**

(71) Applicant: Momentive Specialty Chemicals Research Belgium S.A., 1348 Ottignies Louvain-la-Neuve (BE)
(72) Inventor: Havaux, Nathalie, 1348 Ottignies Louvain-la-Neuve (BE); Simal, François, 1348 Ottignies Louvain-la-Neuve (BE)

(57) **Abstract**

This invention relates to a copolymer composition comprising vinyl ester of 2-ethyl hexanoic acid (VEHA), and more particularly to pressure-sensitive adhesive compositions based on VEHA reacted with (meth)acrylate monomers. The present adhesive compositions provide a film with high cohesion and adhesion values.

## Description

This invention relates to a copolymer composition comprising vinyl ester of 2-ethyl hexanoic acid (VEHA), and more particularly to pressure-sensitive adhesive compositions based on VEHA reacted with acrylate monomers and/or vinyl acetate, and other copolymerisable monomers.

According to definition of the industry the pressure sensitive adhesive (PSA) is a material which is aggressively and permanently tacky, adheres to the substrate with a slight pressure (such as with the finger) and that can be removed from the substrate without leaving a residue.

Commonly used copolymers are pure acrylic resins and generally have a low glass transition temperature (Tg); such a copolymer could be made via an emulsion polymerization.

PSA can achieve adequate adhesion or adequate cohesion, several investigation have tried to optimize this balance between both properties and it is nearly impossible to achieve this, trying to optimize one property will reduce the other. Therefore it is desirable to have an adhesive composition that can provide adhesion and tack while maintaining cohesion at high level.

It has been discovered that the use of vinyl ester of 2-ethyl hexanoic acid (VEHA) in PSA copolymer formulations leads to this good combination of tack and cohesion, and more particularly to pressure-sensitive adhesive compositions based on VEHA reacted with (meth)acrylate monomers and/or vinyl acetate, and other copolymerisable monomers. More particularly a pressure-sensitive adhesive copolymer compositions comprising a reaction product of VEHA and/or an (meth)acrylate, vinyl acetate ,optionally (meth)acrylic acid and optionally a vinyl ester of alkyl in 2 to 17 carbon atoms acids.

Copolymer compositions of this invention are based on a copolymer comprises 20-85 weight % of VEHA and 15-80 wt% of an (meth)acrylate and optionally (meth)acrylic acid and optionally a vinyl ester of alkyl in 2 to 17 carbon atoms acids.

Copolymer compositions of this invention are also based on a copolymer comprises 60-85 weight % VEHA and 15-40 wt% of vinyl acetate and optionally (meth)acrylic acid and optionally a vinyl ester of alkyl in 2 to 17 carbon atoms acids.

The acrylate monomers are including the acrylate and the methacrylate ester commonly use in the field, such as for example: The (meth)acrylates are reaction products of ethylenically unsaturated carboxylic acids and Cl to C20 alcohols. Examples of (meth)acrylates include, but are not limited to, methyl (meth)acrylate, ethyl (meth)acrylate, propyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, benzyl (meth)acrylate, 2-ethylhexyl (meth)acrylate, heptyl (meth)acrylate, n-octyl (meth)acrylate, iso-octyl (meth)acrylate, nonyl (meth)acrylate, decyl (meth)acrylate, 2-propyl heptyl (meth)acrylate, undecyl (meth)acrylate, dodecyl (meth)acrylate, tridecyl (meth)acrylate, lauryl (meth)acrylate, stearyl (meth)acrylate, isobornyl (meth)acrylate, norbornyl (meth)acrylate, 4-tertbutylcyclohexyl (meth)acrylate, 3,3,5-trimethylcyclohexyl (meth)acrylate, dimethyl maleate, n-butyl maleate, alkylene glycol di(meth)acrylates, ethylene glycol di(meth)acrylate, 1,3-butylene glycol di(meth)acrylate, 1,4-butylene glycol di(meth)acrylate, propylene glycol (meth)acrylate, 1,6-hexanediol di(meth)acrylate, dipropylene glycol di(meth)acrylate, tripropylene glycol di(meth)acrylate, trimethylolpropane tri(meth)acrylate, cyclopentadienyl (meth)acrylate, carbodiimide (meth)acrylate, t-butylaminoethyl (meth)acrylate, 2-t-butylaminoethyl (meth)acrylate, and N,N-dimethylaminoethyl (meth)acrylate.

Acrylic acid includes also methacrylic acid which will be used in the same range of concentration as acrylic acid, beta-carboxy ethyl acrylate and itaconic acid.

Examples of vinyl esters of C3 to C18 carboxylic acids include, but are not limited to, vinyl propionate, vinyl n-butyrate, vinyl laurate, vinyl caprate (n-decanoate), and vinyl stereate (n-octadecanoate). Also included are branched vinyl esters, called versatic acids or vinyl neodecanoates such as VeoVa 9, VeoVa 10 (available from Momentive Specialty Chemicals Inc) and vinyl pivalate.

In a preferred embodiment the pressure-sensitive copolymer comprises 20-85 weight % of vinyl ester of 2-ethyl hexanoic acid(VEHA) and 15-80 wt% of an (meth)acrylate and 0-5 wt% of (meth)acrylic acid and 0-25 wt% of a vinyl ester of alkyl in 2 to 17 carbon atoms acids.

In another preferred embodiment the pressure-sensitive copolymer comprises 60-85 weight % VEHA and 15-40 wt% of vinyl acetate 0-5 wt% of (meth)acrylic acid and 0-25 wt% of a vinyl ester of alkyl in 2 to 17 carbon atoms acids, and preferably 1-5 wt% of (meth)acrylic acid and most preferably 2-3wt%, and functional monomers well used by persons skilled in the art as for examples silane derivatives such Silquest A-174 NT which is added shortly before the end of the emulsion polymerization.

Preferably the above given copolymers have a glass transition temperature (Tg) lower as - 5°C. The copolymer composition comprising 20-85 weight % of VEHA and 15-80 wt% of an acrylate and optionally acrylic acid and optionally a vinyl ester of alkyl in 2 to 17 carbon atoms acids, has a glass transition temperature (Tg) lower as - 15°C and preferably lower as - 20°C and most preferably lower as - 25°C, but not lower as -80°C. The copolymer composition comprising 60-85 weight % VEHA and 15-40 wt% of vinyl acetate and optionally (meth)acrylic acid and optionally a vinyl ester of alkyl in 6 to 18 carbon atoms acids, has a (Tg) lower as - 10°C and preferably lower as - 15°C and most preferably lower as - 20°C, but not lower as -80°C. The glass transition temperature here is the onset temperature in accordance with ASTM D 3418-82, determined by means of differential scanning calorimetry (DSC).

The polymers of the present invention and forming the basis of the pressure sensitive adhesive are aqueous polymer dispersions, also called latex. They are prepared preferably by means of free-radically initiated aqueous emulsion polymerization, in which the monomers are emulsified in water with a surface active agent and/or stabilized by a protective colloid and reacted using emulsion polymerization techniques known in the art.
The polymerization medium can comprise either just water or mixtures of water and water-miscible liquids such as methanol. Preferably, only water is used. It is possible to include the totality of the liquid medium in the initial charge to the polymerization vessel. An alternative option is to include none, or only a portion, of the liquid medium in the initial charge and to add it all, or the remaining portion, continuously or discontinuously, in the course of the polymerization.

The polymers can be applied to any substrate, such as rigid or flexible polyolefins, packaging films, glass, corrugated containers, and metals, as a pressure-sensitive adhesive for label and tape applications. The resulting adhesive film can be used as a free film or in conjunction with a carrier material or facestock. Common facestocks include, but are not limited to, papers and films. With tapes, the polymer can be applied to one or both sides of the tape. Typically, the polymer is applied as an aqueous dispersion or emulsion. After the dispersion is applied, the water is removed by ambient drying or by heated drying.

### Examples

### Polymerization procedure:

### Resin A

A reactor charge containing 250.01 g of deionized water and 0.76 g of potassium persulfate (manufactured by Sigma Aldrich) is formed. A pre-emulsion is formed by dissolving 2.02g of sodium carbonate (manufactured by Sigma Aldrich), 23.67g of Disponil A3065 (100% solids, manufactured by Cognis), 33.26g of Dowfax 2A1 (45% solids, manufactured by Dow) in 395.00g of deionized water.

A monomer mix is made up with 0.31g of n- dodecanethiol (manufactured by Sigma Aldrich), 460.11g of 2-ethylhexyl acrylate (manufactured by Sigma Aldrich), 200.18g of vinyl 2-ethylhexanoate (manufactured by Momentive), 150.02g of ethyl acrylate (manufactured by Sigma Aldrich), 150.07g of methyl acrylate (manufactured by Sigma Aldrich), 10.72g of acrylic acid (manufactured by Sigma Aldrich), 30.20 g of methylmethacrylate (manufactured by Sigma Aldrich), 10.00g of Nourycryl MA 123-M50 (50% solution in methyl methacrylate, manufactured by Akzo). The monomer mix is added to the pre-emulsion solution and is stirred.

An aqueous initiator solution is prepared by dissolving 2.27g of potassium persulfate in 120.13g of deionized water.

The reactor charge is introduced to a 3-liter reactor. The reactor charged is heated to 60°C under nitrogen stream. When the temperature of 60°C is reached, the nitrogen steam is stopped and 2.5% weight of the monomer pre-emulsion is added at once. The reactor is heated to 85°C and when the temperature is reached, the pre-emulsion is added over 3 hours at the rate of 8.142g/min. In parallel, the aqueous initiator solution is added over 3.25 hours at the rate of 0.627g/min. Throughout the feeds, the internal temperature of the reactor is maintained at 85°C. After the feeds are complete, the contents are held at 85°C for an additional hour and then cooled to 60°C. A booster shot, made up with 0.13g of Bruggolite® FF6M (manufactured by Brüggemann Chemical) in 5.03g of deionized water. Five minutes after this shot, a parallel addition of reducing agent solution made up with 0.51g of Bruggolite®FF6M in 20.07g of deionized water and a oxidizing agent solution made up with 0.71g of tert-butylhydroperoxyde (70% solution in water, manufactured by Sigma Aldrich) in 20.31g of deionized water is performed. This step is followed by a 30 minutes post cook at 60°C. Finally, the latex is cooled down to room temperature, 4.00g of biocide Acticide MBS (2.5% solution in water, manufactured by Thor) is added. The final latex solids are 54.9%. Viscosity is 327 cps (Brookfield, spindle 2 at 50 rpm). Particle size measurements yielded a monomodal distribution, 189 nm.

### Resin B

A reactor charge containing 357.42 g of deionized water, 1.50 g of Rhodacal DS10 (100% solid, manufactured by Rhodia), 2.00 g of sodium bicarbonate (manufactured by Sigma Aldrich) and 0.99 g of potassium persulfate (manufactured by Sigma Aldrich) is formed.A pre-emulsion is formed by dissolving 2.01 g of sodium bicarbonate (manufactured by Sigma Aldrich), 1.49 g of Rhodacal DS10 (100% solids, manufactured by Rhodia), 31.24 g of Disponil A3065 (65% solids, manufactured by Cognis) in 389.22 g of deionized water.

A monomer mix is made up with 750.03 g of vinyl 2-ethylhexanoate (manufactured by Momentive), 218.50 g of vinyl acetate (manufactured by Sigma Aldrich), and 30.00 g of acrylic acid (manufactured by Sigma Aldrich). The monomer mix is added to the pre-emulsion solution and is stirred.

An aqueous initiator solution is prepared by dissolving 2.32 g of potassium persulfate in 120.01 g of deionized water.

The reactor charge is introduced to a 3-liter reactor. 5.00 g of Cellosize QP300 (manufactured by Dow) are added in the reactor under stirring via a powder funnel to the reactor charge. The reactor charged is heated to 60°C under nitrogen stream. When the temperature of 60°C is reached, the nitrogen steam is stopped and 2.5% weight of the monomer pre-emulsion is added at once. The reactor is heated to 80°C and when the temperature is reached, the pre-emulsion is added over 3 hours at the rate of 7.911 g/min. In parallel, the aqueous initiator solution is added over 3.25 hours at the rate of 0.627 g/min. Throughout the feeds, the internal temperature of the reactor is maintained at 80°C. 30 minutes before the end of the pre-emulsion addition, 1.50 g of Silquest A-174 NT (manufactured by Momentive) are added to the pre-emulsion. After the feeds are complete, the contents are held at 80°C for two additional hours and then cooled down to room temperature. The final latex solids are 53.2%. Viscosity is 351 cps (Brookfield, spindle 2/50 rpm). Particle size measurements yielded a monomodal distribution, 351 nm.

**Table 1: copolymer compositions**

| Monomer | A | B | C | Comparative 1 | Comparative 2 |
|---|---|---|---|---|---|
| VEHA | 200 | 750 | 700 | - | - |
| VA | - | 218 | - | - | - |
| 2EHA | 460 | - | - | - | 600 |
| EA | 150 | - | 125 | 125 | 150 |
| MA | 150 | - | 125 | 125 | 200 |
| AA | 10 | 30 | 10 | 10 | 10 |
| MMA | 30 | - | 30 | 30 | 30 |
| VL | - | - | - | 700 | - |

| | | | | | |
|---|---|---|---|---|---|
| VEHA: vinyl of ethyl hexanoic acid, VA: vinyl acetate, 2EHA: 2-ethyl hexyl acrylate, EA: ethyl acrylate, MA: methyl acrylate, AA: acrylic acid, MMA: methyl methacrylate, VL: vinyl laurate. | | | | | |

**Table 2: copolymer Tg**

| Compostion | A | B | C | Comparative 1 | Comparative 2 |
|---|---|---|---|---|---|
| Tg °C calulated | -38 | -24 | -28 | -56 | -38 |
| Tg °C measured | -38 | -17 | -21 | -31 | -41 |

| | | | | | |
|---|---|---|---|---|---|
| Calculated Tg according the Fox equation; Measured Tg according the method set above by DSC. | | | | | |

### Test methods:

- Adhesion-180° Peel test according to the FTM-1 method was done on samples after 24h storage at 25°C, RH:50%; the substrate is stainless steel (SS), glass or high densitypolyethylene (PE).
- Loop-Tack test according to the FTM-9 method was done on a sample of 1x1 x 25 mm on SS after 24h storage at 25°C.
- Cohesion-static shear test according to FTM-8 method was done on a sample of 1x0.5 25 mm-1 kg on SS after 24h storage at 25°C.

**Table 3: properties of the applied adhesives**

| Test | A | B | C | Comparative 1 | Comparative 2 |
|---|---|---|---|---|---|
| Adhesion SS N/25mm | 8.3 | 9.6 | 9.3 | 4.8 | 7.9 |
| PE N/25mm | 4.0 | 4.2 | 4.6 | 2.5 | 4.1 |
| Glass N/25mm | 7.5 | 9.1 | 8.6 | 3.6 | 7.2 |
| Tack N/25mm | 5.1 | 3.4 | 5.8 | 2.5 | 4.2 |
| Cohesion minutes | 10 000 | >10 000 | >10 000 | >10 000 | 1653 |

The adhesive compositions of this invention containing the vinyl ester of 2-ethyl hexanoic acid lead to high cohesion values with high adhesion values as tested on steel. The use of vinyl laurate provide also high cohesion but lower adhesion values. The adhesive based on acrylate monomer only leads to lower cohesion values but keeping good adhesion.

## Claims

1. A pressure-sensitive adhesive copolymer compositions comprising a reaction product of the vinyl ester of 2-ethyl hexanoic acid and an (meth)acrylate, or vinyl acetate and optionally (meth)acrylic acid and optionally a vinyl ester of alkyl in 2 to 17 carbon atoms acids.

2. The copolymer compositions of claim 1 **characterized in that** the copolymer comprises 20-85 weight % of vinyl ester of 2-ethyl hexanoic acid (VEHA) and 15-80 wt% of an (meth)acrylate and optionally (meth)acrylic acid and optionally a vinyl ester of alkyl in 2 to 17 carbon atoms acids.

3. The copolymer compositions of claim 1 **characterized in that** the copolymer comprises 60-85 weight % VEHA and 15-40 wt% of vinyl acetate and optionally (meth)acrylic acid and optionally a vinyl ester of alkyl in 2 to 17 carbon atoms acids.

4. The copolymer compositions of claims 2 or 3 **characterized in that** the copolymer comprises 0-5 wt% of (meth)acrylic acid and 0-25 wt% of a vinyl ester of alkyl in 2 to 17 carbon atoms acids.

5. The copolymer compositions of claims 1-4 made by an emulsion polymerization route.

6. A pressure-sensitive adhesive composition comprising the copolymer composition of claims 1-4 and silane derivatives, a takifier, an antifoam, a plasticizer, a surfactant, a wetting agent, a protective colloid, filler, a thickening agent, an antiseptic, a biocide, a dispersing agent, a pH adjusting agent, a corrosion inhibitor, an ultraviolet light stabilizer, a crosslinking promoter, an antioxidant, and another polymer.

7. A pressure-sensitive adhesive composition comprising the copolymer composition of claims 1-4 wherein the copolymer has a glass transition temperature (Tg) lower as - 5°C.

8. The pressure-sensitive adhesive composition comprising the copolymer composition of claim 2 wherein the copolymer has a Tg lower as - 15°C and preferably lower as - 20°C and most preferably lower as - 25°C, but not lower as -80°C.

9. The pressure-sensitive adhesive composition comprising the copolymer composition of claim 3 wherein the copolymer has a Tg lower as - 10°C and preferably lower as - 15°C and most preferably lower as - 20°C, but not lower as -80°C.

10. The copolymer compositions of claim 3 **characterized in** the copolymer comprises at least 1-5 wt% of acrylic acid and preferably 2-3wt%.

11. A pressure-sensitive adhesive composition comprising the copolymer composition of claims 1-9 wherein the adhesive layer has at least:
a. 180°peel as measured, by FTM-1 on stainless steel at room temperature after 24h, of from 7.5 N/25mm to 10 N/25mm,
b. 180°peel as measured, by FTM-1 on polyethylene at room temperature after 24h, of from 3.5 N/25mm to 6 N/25mm,
c. 180°peel as measured, by FTM-1 on glass at room temperature after 24h, of from 7.5 N/25mm to 12 N/25mm,
d. shear holding as measured, by FTM-8 on stainless steel at room temperature after 24h, of more than 5000 min and preferably more than 7000 min, and most preferably more than 9000 min,
e. loop-tack test measured, by FTM-9 on stainless steel at room temperature after 24h, of from 3 N/25mm to 10 N/25mm.

12. A pressure-sensitive adhesive composition comprising the copolymer composition of claims 1-9 wherein the adhesive layer has:
a. 180°peel as measured, by FTM-1 on stainless steel at room temperature after 24h, of from 7.5 N/25mm to 10 N/25mm,
b. 180°peel as measured, by FTM-1 on polyethylene at room temperature after 24h, of from 3.5 N/25mm to 6 N/25mm,
c. 180°peel as measured, by FTM-1 on glass at room temperature after 24h, of from 7.5 N/25mm to 12 N/25mm,
d. shear holding as measured, by FTM-8 on stainless steel at room temperature after 24h, of more than 5000 min and preferably more than 7000 min, and most preferably more than 9000 min,
e. loop-tack test measured, by FTM-9 on stainless steel at room temperature after 24h, of from 3 N/25mm to N/25mm.
